# EUROPEAN PATENT SPECIFICATION

(11) **EP 3 089 062 B1**
(45) Date of publication and mention of the grant of the patent: **28.08.2019**
(21) Application number: 14874447.7
(22) Date of filing: 21.11.2014
(51) Int. Cl.: G06F 21/32, G06F 21/35, G06F 21/34, H04L 29/06, H04W 12/06, G07C 9/00

(54) **PORTABLE KEY DEVICE AND DEVICE CONTROL METHOD**
TRAGBARE SCHLÜSSELVORRICHTUNG UND VORRICHTUNGSSTEUERUNGSVERFAHREN
DISPOSITIF DE CLÉ PORTABLE ET PROCÉDÉ DE COMMANDE DE DISPOSITIF

(30) Priority: 24.12.2013 JP 2013264833
(43) Date of publication of application: 02.11.2016
(73) Proprietor: Hitachi, Ltd., Chiyoda-ku Tokyo 100-8280 (JP)
(72) Inventor: KITANE Keiji, Tokyo 100-8280 (JP)
(74) Representative: Mewburn Ellis LLP
(86) International application number: PCT/JP2014/080843
(87) International publication number: WO 2015/098384

(56) References cited:
- JP-A- 2003 058 509
- JP-A- 2003 085 150
- JP-A- 2005 071 225
- JP-A- 2008 073 462
- US-A1- 2002 129 268
- US-A1- 2009 094 681
- US-A1- 2011 314 539
- US-A1- 2013 200 997

## Description

### Technical Field

The present invention is defined in the independent claims 1 and 4 and relates to a technique of device control by a portable key device using biometric authentication technology.

### Background Art

Functions of portable devices, such as cellular phones, smartphones, and tablet PCs, have been increasing and opportunities of using the portable devices for settlement or business of a company have also been increasing. With this increase, security technology for preventing impersonation has become more important.

A portable device is locked with a secret code or a pattern, for example. However, when the portable terminal is stolen or lost, for example, and a third party acquires the portable terminal, the secret code or the pattern may be analyzed, so that the portable device is illicitly used.

In order to prevent impersonation and surely authenticate a person, it is effective to perform identification confirmation by biometric authentication using a biometric feature that is different between individuals, instead of using the secret code or the pattern lock.

A portable device incorporating therein a small device of fingerprint authentication, which is one type of biometric authentication, has been developed these days. This device uses identification confirmation by biometric authentication to prevent illicit use by impersonation by a third party (see Patent Literature 1, for example.) Additional prior art is known from US2011314539 and US2013200997.

### Citation List

### Patent Literature

Patent Literature 1: Japanese Patent Application Publication No. 2009-286343

### Summary of Invention

### Technical Solution

However, biometric authentication may fail because of a manner of biometric input or a change in biometric information, as defined as a false rejection rate, for example, although a user oneself performs the biometric authentication. Further, in order to prevent impersonation, biometric input is requested every time the portable device is unlocked. Therefore, ease of use is not good, as compared with the secret code or the pattern lock.

Furthermore, because fingerprint recognition uses a fingertip only, the size of the device can be reduced and the device can be incorporated into the portable device. Meanwhile, a finger vein authentication device using a vein pattern inside a finger, a palm vein authentication device using a palm and an iris authentication device using an iris of an eye, for example, use internal information of a living body. Therefore, as compared with the fingerprint authentication, those devices have advantages that the internal information of the living body can be hardly copied, authentication is less affected by the condition of the living body, such as rough hands, and authentication accuracy is higher than the fingerprint authentication because the information amount is large. However, it is difficult to reduce the sizes of those devices, and is therefore difficult to incorporate those devices into the portable device.

In order to solve these problems, the present invention provides a technique of device control by a portable key device that incorporates a wireless communication function therein and uses biometric authentication technology allowing an advantage of identification confirmation by biometric authentication to be used and reducing the number of authentications. Solution to Problem

An example of a solution by the present invention is set forth below.

Two portable key devices with a wireless communication function, communicating with each other (for example, wireless key devices, portable devices having an application installed therein, such as cellular phones or smartphones, or biometric authentication devices with a wireless communication function) are prepared. A biometric authentication operation is performed in a state where wireless communication is established. When biometric authentication is successful, an authentication success context is saved in either of the portable key devices, to make that device transit to a state of emitting an unlock signal. Upon receiving the unlock signal, a control object device does not request further biometric authentication, but is unlocked and becomes operable. When reception of that signal is stopped, the control object device is locked.

In the state where the wireless communication between the two portable key devices is established, the portable device is in the state of emitting the unlock signal. When the wireless communication is interrupted, the biometric authentication success context is discarded, the portable device transits to a state where emission of the unlock signal is stopped. In order to emit the unlock signal again, the portable device requests the biometric authentication.

### Advantageous Effects of Invention

According to the present invention, a biometric authentication success context is saved and the number of biometric authentications required of a user is reduced, and use by another person is limited by discarding the authentication success context when a key device is left behind, for example, thereby improving both ease of use and safety.

### Brief Description of Drawings

FIG. 1 illustrates a device control system using wireless communication according to an embodiment of the present invention.
FIG. 2 illustrates a device control system using a server-using biometric authentication device according to an embodiment of the present invention.
FIG. 3 illustrates a device control system using a wearable biometric authentication device according to an embodiment of the present invention.
FIG. 4 illustrates a device control system using a wearable device according to an embodiment of the present invention.
FIG. 5 illustrates the wearable biometric authentication device according to the embodiment of the present invention.
FIG. 6 illustrates an example of the wearable device according to the embodiment of the present invention.
FIG. 7 illustrates a circuit example of the wearable device according to the embodiment of the present invention.
FIG. 8 is a flowchart of a biometric authentication operation according to an embodiment of the present invention.
FIG. 9 is a flowchart of an operation of a portable device according to an embodiment of the present invention.
FIG. 10 is a flowchart of an operation of a control object device according to an embodiment of the present invention.

### Description of Embodiments

Embodiments of the present invention are described below.

### First Embodiment

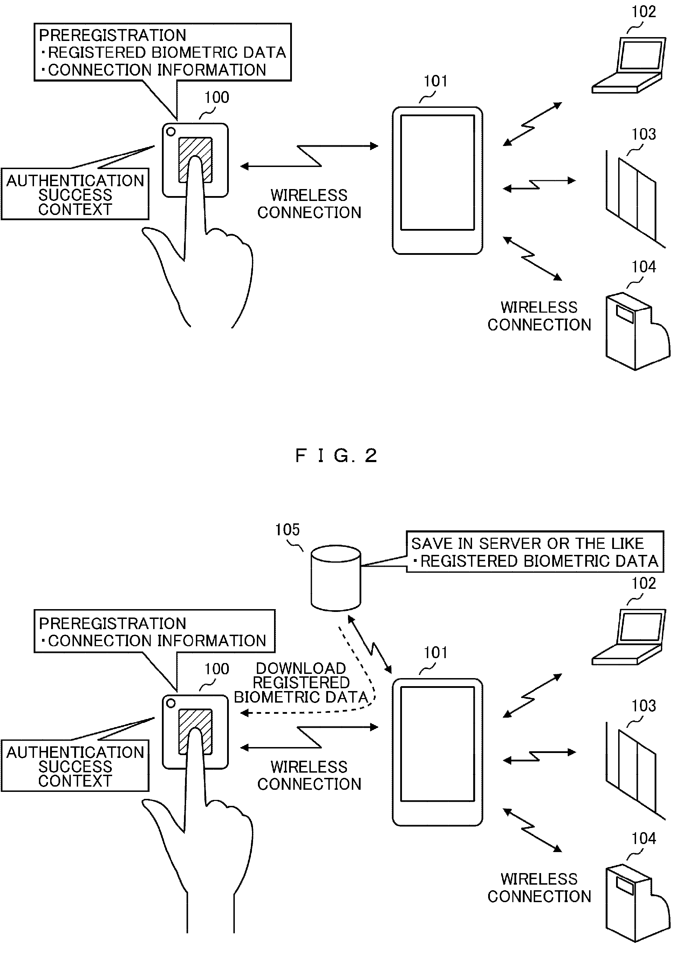

FIG. 1 is an overall conceptual diagram of the present embodiment. The present embodiment uses a biometric authentication device 100, a portable device 101, and control object devices 102 to 104.

The biometric authentication device 100 includes a communication unit and a biometric information input unit. Registered biometric data used for data matching and connection information of a portable device 101 that is a connection destination are preregistered in the biometric authentication device 100. Registration of the registered biometric data and the connection information is performed by the biometric authentication device alone or by the biometric authentication device connected to an upper device, such as a PC (Personal Computer). Although the description will be made referring to a finger vein as a living body used for authentication, other biometric authentication using a fingerprint, a palm print, a palm vein, an iris, or a face, for example, can be used.

The information on connection with the portable device 101 corresponds to paring information between devices in a wireless standard, such as Bluetooth (registered trademark), for example, and is connection information enabling only between a specific biometric authentication device and a specific portable device to establish secure wireless one-to-one connection therebetween. Further, the biometric authentication device 100 incorporates a battery or the like therein and can be used in a mobile environment.

The portable device 101 includes a communication unit, an input/output unit (for example, a display with a touch panel), and a computing unit (processor).

The control object devices 102 to 104 are devices controlled by this biometric authentication device. Examples of a control object are login control of a PC 102, locking, opening, and closing of a door of a room access management device 103, a settlement process of a settlement terminal 104.

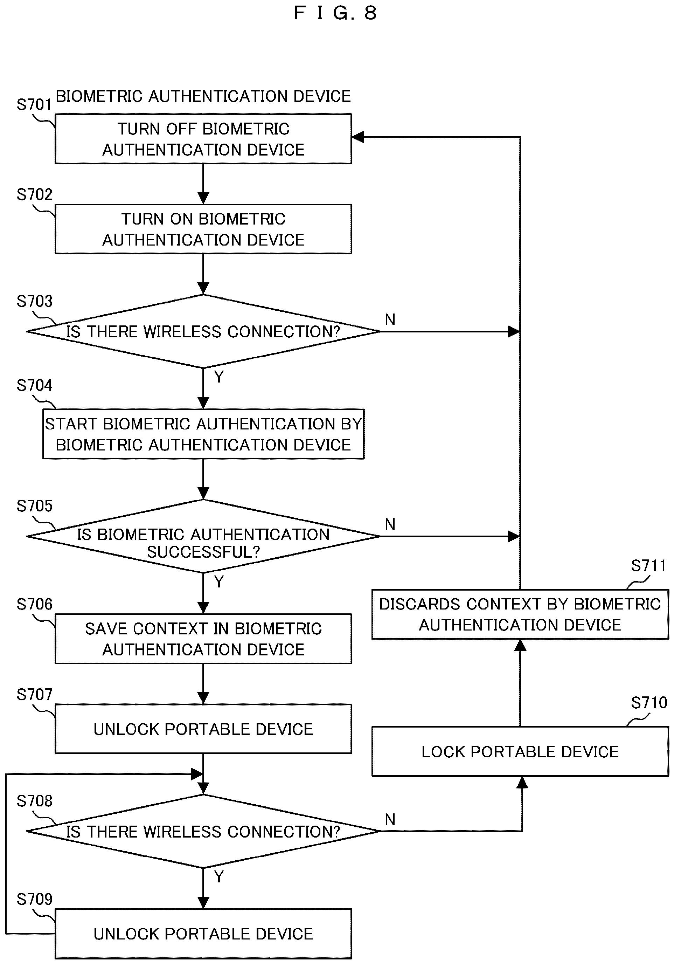

FIG. 8 is a flowchart of an operation of the biometric authentication device 100.

After a user turns the power of the biometric authentication device 100 from off to on (S701 to S702), the biometric authentication device 100 starts connection with the portable device 101 via wireless communication (S703). When the wireless communication has not been established in a certain period of time, the biometric authentication device transits to a power-OFF state (S701). When the wireless communication has been established, the biometric authentication device 100 prompts the user to input biometric information and performs biometric authentication (S704). When the biometric authentication is successful, the biometric authentication device 100 saves an authentication success context therein, and the portable device 101 having received information on success of the authentication transits to an unlocked state (S705 and S706). When the authentication fails, the biometric authentication device 100 transits to the power-OFF state (S701). After the context is saved and the portable device 101 transits to the unlocked state, the biometric authentication device 100 and the portable device 101 continue to monitor a state of the wireless communication (S708). During a period in which the wireless communication between the biometric authentication device 100 and the portable device 101 is established, the portable device 101 continues to be in the unlocked state (S709). The user always carries the biometric authentication device and the portable device therewith to keep them in a communicable range of the wireless communication, thereby capable of using the portable device without an unlocking operation, such as input of a password.

When the biometric authentication device 100 or the portable device 101 is dropped or left behind, the distance between the biometric authentication device 100, the portable device 101 increases to the communicable range or more, and the wireless communication is interrupted, the portable device 101 transits to a locked state (S710), and the biometric authentication device 101 discards the authentication success context (S711) and transits to the power-OFF state.

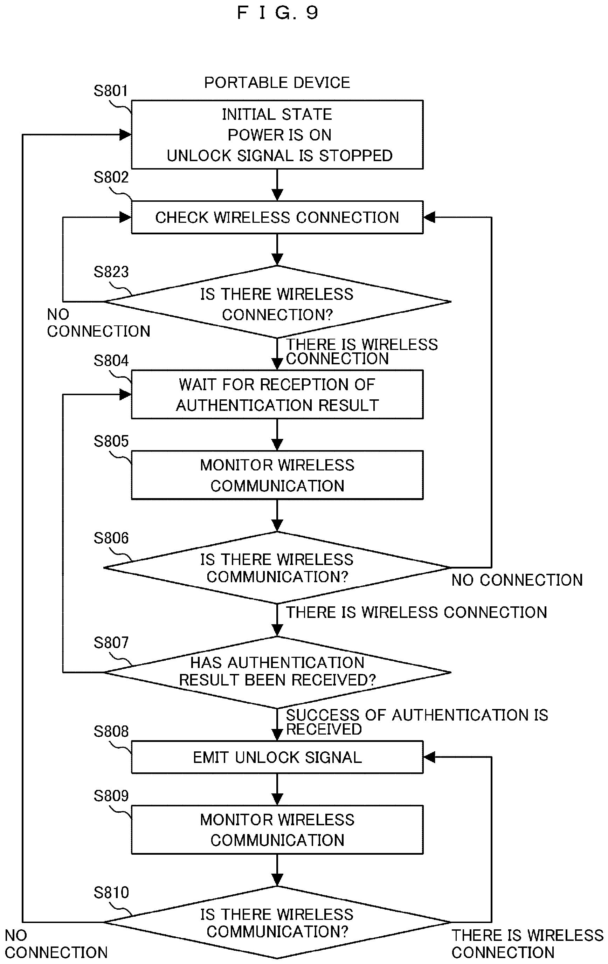

FIG. 9 is a flowchart related to an operation of the portable device 101.

When the portable device 101 is turned on (S801) and is brought close to the biometric authentication device 100 in which that portable device 101 is preregistered by connection information, the portable device 101 and the biometric authentication device 100 automatically establish connection via wireless communication, and the biometric authentication device 100 transits to a state of waiting for input from a living body (S802 and S803). It is assumed that the wireless connection is achieved by secure one-to-one connection between the specific biometric authentication device 100 and the specific portable device 101 by exchange of encryption keys, for example.

When a user inputs a living body into the biometric authentication device 100 in this state, the biometric authentication device 100 measures biometric information of the living body input thereto to create authentication biometric data, and performs biometric authentication by matching the authentication biometric data and registered biometric data that is preregistered. When it has been determined as a result of the matching that the authentication biometric data and the registered biometric data are the same, the authentication is successful. Thus, an authentication success context is created and saved in the device, and success of the authentication is transmitted to the portable device wirelessly. When the authentication fails, the biometric authentication device transits to a power-OFF state in order to reduce the amount of battery consumption.

The portable device waits for reception of the success of authentication, while monitoring the wireless communication (S804 and S805). In this state, when the wireless communication is interrupted, the portable device returns to a state where it monitors the wireless communication, and the biometric authentication device 100 stops the biometric authentication (S806 and S802). In a case where the biometric authentication is successful, the portable device 101 that has received the success of authentication starts emitting an unlock signal for switching a control object device from a locked state to an unlocked state (S807).

Thereafter, the portable device 101 continues to be in a state of emitting the unlock signal and the biometric authentication device 101 continues to save the authentication success context, during a period in which the wireless communication between the biometric authentication device 100 and the portable device 101 is maintained.

The biometric authentication device 100 and the portable device 101 monitor the state of the wireless communication (S809). When the wireless communication between the biometric authentication device 100 and the portable device 101 is interrupted at least once, the biometric authentication device 100 discards the authentication success context and transits to the power-OFF state, and the portable device 101 transits to a state where the emission of a lock signal is stopped.

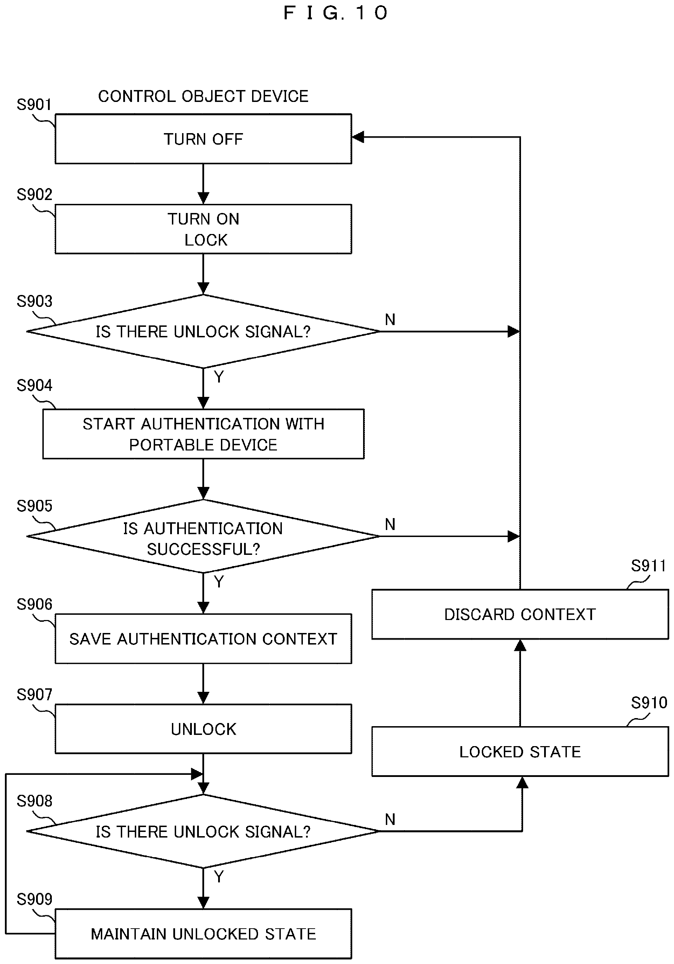

FIG. 10 is a flowchart related to an operation of the control object devices 102 to 104.

First, the power of the control object device is switched from off to on (S901 and S902). In this state, the control object device is locked, that is, cannot receive an operation. The control object device then waits for an unlock signal from the portable device 101.

Upon receiving the unlock signal, the control object device starts authentication of the portable device. When the unlock signal has been determined to be the one for the control object device, the authentication is successful, so that the control object device saves its authentication context therein (S904 to S906). In this authentication, the control object device can further communicate with the portable device 101 to request information. Although the control object device can further request a context of biometric authentication information to the portable device 101, a user is not requested to newly input biometric information. When the authentication has failed, the control object device continues to be in the locked state (S902).

When saving the authentication context, the control object device is unlocked and is placed in an operable state (S907), and the user can use the control object device.

In an unlocked state, the control object device continues to monitor the unlock signal from the portable device 101 and continues to be in the unlocked state where the control object device is operable during a period in which the control object device receives the unlock signal (S909). When receiving of the unlock signal has stopped, the control object device is placed in the locked state where it cannot be operated, discards the authentication context, and returns to the state of waiting for the unlock signal (S910, S911, and S902).

The operations of the biometric authentication device 100, the portable device 101, and the control object devices 102 to 104 provide the following advantageous effects.

In order to unlock the control object device 102 to 104 to make it operable, biometric information is requested in addition to the biometric authentication device 100 and the portable device 101. With this configuration, a person other than the user oneself cannot unlock the control object device and therefore the safety can be enhanced.

The control object device unlocks itself based on the presence or absence of the unlock signal, but does not request newly reading of biometric information from the user's body when unlocking itself. The user carries the biometric authentication device 100 and the portable device 101 therewith while putting them in pockets of a cloth or the like, thereby establishing wireless communication and saving the biometric authentication success context. Because the wireless communication is left established, the portable device continues to emit the unlock signal. Therefore, the user can unlock the control object device by approaching to the control object device. It is unnecessary to read biometric information every time the unlocking is performed.

Meanwhile, in a case where the biometric authentication device 100 or the portable device 101 is away from the other device by being stolen or left behind, for example, the distance between the portable device 101 and the biometric authentication device 100 exceeds the communication range. Therefore, the wireless communication is interrupted, the biometric authentication device 100 discards the authentication success context and transits to the power-OFF state, and the portable device 101 stops emission of the unlock signal. In order to recover from this state, it is necessary to turn on the biometric authentication device 100 to communicate with the portable device, and perform biometric authentication. That is, only the user can place the device into the state of emitting the unlock signal again. Even if a third party acquires either one of the biometric authentication device and the portable device or third parties acquire them separately, the third party/parties cannot use it/them because of having no biometric information.

It is desirable that the user retains the biometric authentication device 100 and the portable device 101 carried by the user in separate pockets of a cloth/clothes, separate pieces of baggage, or the like not to drop or leave behind both together. In the present embodiment, an authentication application is installed into a smartphone, so that the smartphone is used as the portable device 101. Therefore, the portable device 101 can be used as the smartphone that also has functions other than a portable key. Other than the smartphone, a notebook PC or a tablet PC can be used, so long as it can be carried by the user.

Further, the portable device 101 is continuously used by the user for a purpose other than the authentication. Therefore, the portable device 101 is put in place from which the portable device 101 can be easily taken out, for example, a chest pocket or a bag. The biometric authentication device 100 is desirably put in a place integrated with the user oneself, from which the biometric authentication device 100 is hardly dropped, such as a trouser's pocket, because it is unnecessary for the user to use the biometric authentication device 100 after the authentication is successful and it is enough that the biometric authentication device 100 keeps the wireless communication with the portable device 101 established. In s case of a combination of a biometric authentication terminal used only for a portable key and the portable device 101 that can be also used for another purpose, it is considered that the user carries the portable device 101 and the biometric authentication device 100 while putting them in different places, for example, in the place from which the portable device 101 can be easily taken out and in the place which does not hinder an action of the user or from which the biometric authentication device 100 is hardly dropped. Therefore, possibilities of losing both together can be reduced.

For improving the security, a radio wave output of wireless communication of the biometric authentication device 100 or the portable device 101 can be set in such a manner that connection can be established only in short distance, for example, about one meter to about three meters.

The control object device to be unlocked can be used in combination with the PC 102 with a wireless function installed therein, a door access management device 103, a settlement terminal 104, or the like.

In a case of the PC 102, the portable device 101 in the state of emitting the unlock signal approaches to the PC 102 that is in a logout state, the PC 102 and the portable device 101 are connected to each other by wireless communication, and the PC 102 is placed into a logon state at a time of completion of mutual authentication. By this procedure, the user can log-on the PC 102 in the same manner as that in identification confirmation performed in every log-on operation by performing biometric authentication once, without performing biometric authentication in every log-on operation.

In a case of the door access management 103, the portable device 101 in the state of emitting the unlocked signal approaches to the door access management device. When the door access management device and the portable device 101 are connected by wireless communication and mutual authentication is completed, a door is unlocked. By this procedure, without performing biometric authentication in every entrance or exit, it is possible to allow entrance to a room and exit from the room by performing biometric authentication once, in the same manner as that in the case of performing identification confirmation in every entrance to the room, as in the case of the PC.

In a case of the settlement terminal 104, the portable device in the state of emitting the unlock signal is brought close to the settlement terminal 104 when settlement is performed, thereby the portable device 101 and the settlement terminal 104 are connected via wireless communication, mutual authentication is completed, and settlement is performed. In this procedure, a simple operation for the settlement terminal 104 can be requested in order to confirm the settlement. In this manner, the user can perform settlement in the same manner as that in the case where identification confirmation is performed in every settlement, without performing biometric authentication in every settlement, but by performing biometric authentication once.

The user can set a valid time of the authentication success context in the biometric authentication device 100. When a time from success in the biometric authentication and creation of the context is counted and the time set by the user passes, the biometric authentication device 100 discards the authentication success context saved therein, and transits to the power-OFF state. Alternatively, the biometric authentication device 100 includes a clock therein. When the time set by the user has come, the biometric authentication device 100 discards the authentication success context in the authentication device and transits to the power-OFF state.

When the user sets the time of discarding the context at night, it is possible to discard the authentication success context at a specified time to make the portable device 101 transit to the locked state, even if the user performs authentication in the morning, uses the portable device 101 until night, and thereafter leaves the biometric authentication device 100 and the portable device together after work.

Further, when the record of the wireless communication between the biometric authentication device 100 and the portable device 101 is used, a place where the biometric authentication device or the portable device is lost can be estimated in a case where the biometric authentication device or the portable device is lost. A time at which the wireless connection between the biometric authentication device and the portable device is interrupted is recorded on the biometric authentication device or the portable device or is recorded on a server on a network by the portable device 101. When the biometric authentication device 100 or the portable device 101 is lost by being left behind, for example, the time of interruption of the wireless connection is checked, and the place where the other device is lost can be estimated from an action by the user at that time (for example, position information by GPS, room access record, or the like) .

As described above, two devices, i.e., the biometric authentication device 100 and the portable device 101, and wireless communication are used, thereby enabling identification confirmation to be performed in the same manner as that in a case of performing the biometric authentication every time the control object device is used, without performing the biometric authentication in every identification confirmation but by performing biometric authentication once. Also, the result of the identification confirmation can be used for PC log-on, access management, and settlement.

The function of inputting the biometric information, registered biometric data, and the function of biometric authentication can be provided in a device separate from two portable key devices in a communicable manner, so long as the two portable key devices (the biometric authentication device 100 and the portable device 101) that can perform wireless communication mutually are provided and at least one of them has a function of saving therein the biometric authentication success context, although described in embodiments set forth below.

### Second Embodiment

A second embodiment is described. The second embodiment is mostly the same as the first embodiment and therefore the detailed description is omitted. A difference between the second embodiment and the first embodiment is as follows. According to the first embodiment, registered biometric data is registered in the biometric authentication device 100 and, when the biometric authentication device 100 is lost, the registered biometric data in the biometric authentication device 10 is also lost.

Therefore, the registered biometric data is stored in a place different from the biometric authentication device 100 and the portable device 101, such as a server 105, as illustrated in FIG. 2. When wireless communication between the biometric authentication device 100 and the portable device 101 is established, the portable device 101 communicates with the server 105 to download the registered biometric data from the server 105. Upon completing the download of the registered biometric data, the portable device 101 transmits the downloaded registered biometric data to the biometric authentication device 100. The biometric authentication device 100 uses the registered biometric data thus received to perform matching with input biometric information, thereby performing biometric authentication.

When the authentication is successful, the biometric authentication device 100 creates a context of biometric authentication success, saves the created context within the biometric authentication device 100, and thereafter discards the received registered biometric data. After this, the same processing is performed as that in the first embodiment.

When the authentication fails, the biometric authentication device 100 discards the registered biometric data received, and transits to the power-OFF state.

By the above-described method, it is possible to protect the registered biometric data even if the biometric authentication device 100 is lost.

### Third Embodiment

A third embodiment is described. A biometric authentication device may be configured to be a wearable biometric authentication device 106 that is in a form worn by a user, such as a watch or a bracelet. Although it is detected that a key device is away from the user, based on interruption of wireless communication according to the first and second embodiments, a wearable device that is to be worn on the user's body is used according to the present embodiment, so that it is detected that the wearable device is away from the user's body.

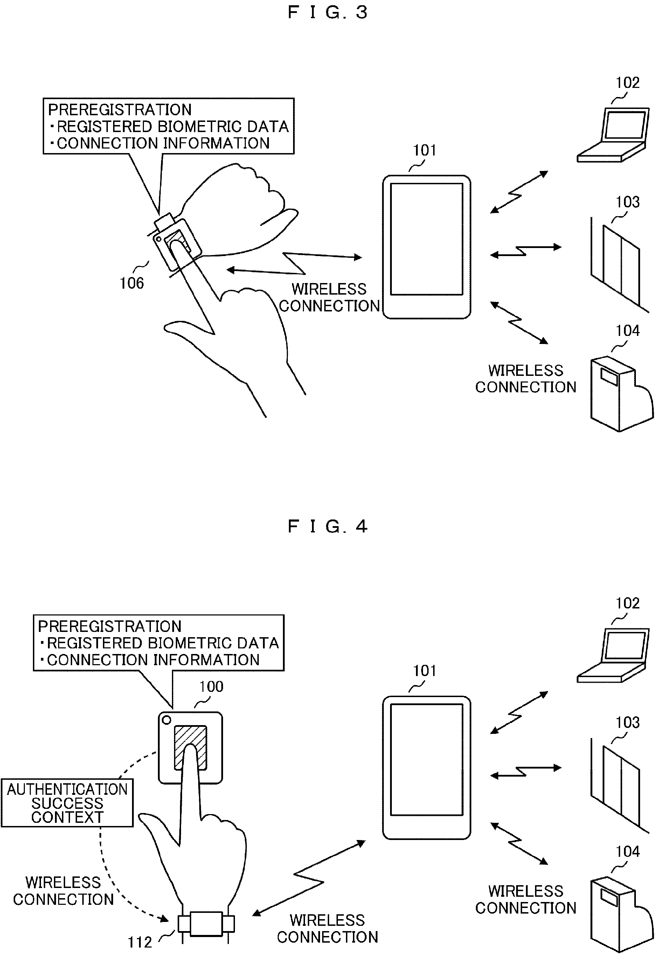

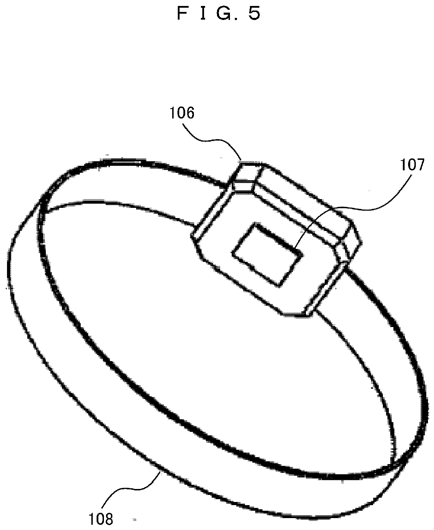

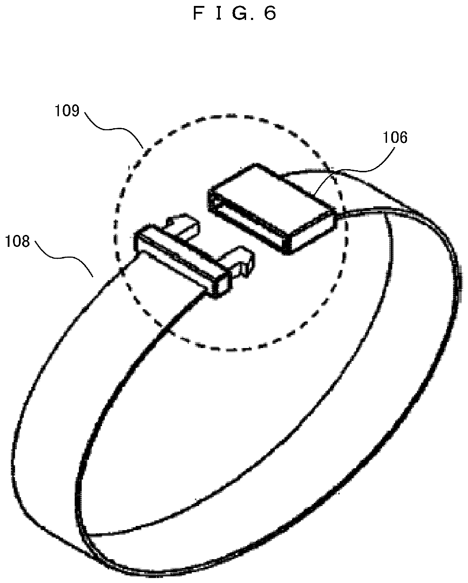

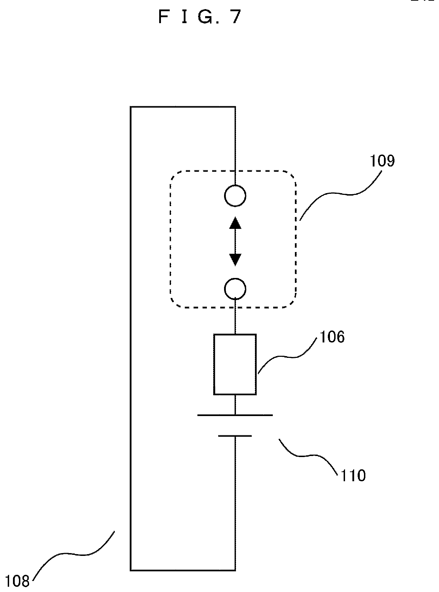

FIG. 3 is a conceptual diagram of the wearable biometric authentication device 106. In this case, it is assumed that the wearable biometric authentication device 106 includes a living body detection function 107, such as a pulsimeter, as illustrated in FIG. 5, and can detect removal of the wearable biometric authentication device 106 from a human body. Alternatively, the wearable biometric authentication device 106 may have a shape illustrated in FIG. 6 and a circuit structure illustrated in FIG. 7, so that it is necessary to open an opening/closing mechanism 109 in order to remove the wearable biometric authentication device 106 and the opening/closing function 109 detects removal from a living body. That is, the wearable biometric authentication device 106 may have a structure that involves a change in shape when being removed from the living body, so that the removal from the living body is detected by detecting the change in shape.

The wearable biometric authentication device 106 performs biometric authentication only while being worn by a user, as in the first and second embodiments, and creates an authentication success context and saves the context therein when the authentication is successful.

Because the wearable biometric authentication device 106 is completely integrated with the user according to the present embodiment, the wearable biometric authentication device 106 is not lost even if wireless connection between the wearable biometric authentication device 106 and the portable device 101 is interrupted. Thus, it is unnecessary to discard the authentication success context in the biometric authentication device 100.

The authentication success context in the wearable biometric authentication device 106 is discarded only when the user removes the wearable biometric authentication device 106 or when the discard is instructed by a switch or the like provided in the wearable biometric authentication device 106.

In a case where the user maintains a state in which the user wears the wearable biometric authentication device 106 on the user's body, the wearable biometric authentication device still stores the authentication success context, when the wireless communication between the wearable biometric authentication device and the portable device is interrupted and thereafter the biometric authentication device and the portable device approach to each other so that the wireless communication is established again. Thus, it is possible to unlock the portable device again without performing the biometric authentication.

Further, according to the present embodiment, the wearable biometric authentication device 106 can save the biometric authentication success context and emit the unlock signal, without using the portable device 101. Also in this case, when the wearable biometric authentication device 106 is removed from the body of the user, the removal is detected, so that the biometric authentication success context is discarded and emission of the unlock signal is stopped. In this manner, effects are achieved.

### Fourth Embodiment

An embodiment illustrated in FIG. 4 is an embodiment in a case where the authentication success context created by the biometric authentication device is further transferred to and used by another device. In addition to the biometric authentication device 100 and the portable device 101, another wearable device 111 with a wireless communication function, such as a watch or a bracelet, is used. It is assumed that the wearable device 111 has a function of detecting that it is worn by a user by a living body detection function, shape change detection, or the like, as in the third embodiment.

When an authentication is successful, the biometric authentication device 100 creates the authentication success context and transmits it to the wearable device 11. The wearable device 111 receives and saves the context and sends back success in receiving the context to the biometric authentication device 100. At a time at which the biometric authentication device 100 receives this, the biometric authentication device 100 discards the authentication success context.

The wearable device 111 monitors, using the living body detection function, that the user wears the wearable device 111. At a time at which the wearable device 111 is removed from the user, the wearable device 111 discards the authentication success context.

When the wearable device 111 saving the authentication success context therein approaches to a portable device 101, which has a wireless function and is locked, for example, a cellular phone or a smartphone, the wearable device 111 establishes wireless connection with the portable device and device authentication is mutually performed. When the device authentication is successful, the portable device 101 transits to a state of emitting an unlock signal. Thereafter, the portable device 101 maintains the state of emitting the unlock signal during a period in which the wireless connection with the wearable device is established.

When the portable device 101 is in the state of emitting the unlock signal, it is possible to use the portable device 101 as a PC 102, a door access management 103, and a settlement terminal 104, as in the first embodiment.

In a case where the portable device 101 is lost by being stolen or left behind, for example, when the distance between the wearable device 111 and the portable device 101 increases to the communicable range of wireless communication or more and the wireless communication is therefore interrupted, the portable device 101 transits to the state of stopping emission of the unlock signal, so that a third party cannot use the portable device 101.

Because the wearable device 111 has a function of detecting that it is worn by the user, as in the third embodiment, it is guaranteed that the wearable device is integrated with the user while it is detected that the wearable device is worn by the user even after wireless connection with the portable device 101 is interrupted. Therefore, it is unnecessary to discard the authentication success context saved inside the wearable device, and the portable device transits to the state of emitting the unlock signal when the wireless connection with the portable device is established again.

The authentication success context may be discarded when the wireless connection between the portable device 101 and the wearable device 111 is interrupted. Alternatively, the context may be discarded when the wireless connection is interrupted and the wearable device is removed.

According to the present embodiment, the wearable device worn by the user does not include a biometric authentication device. Therefore, a biometric authentication device that is large in case size but is high in authentication accuracy, such as a vein authentication device or an iris authentication device, can be used. Further, it is enough that the wearable device incorporates the wireless communication function therein. Therefore, it is possible to reduce the size of the wearable device and save the power thereof.

### List of Reference Signs

- 100: Biometric authentication device
- 101: Portable device
- 102: PC
- 103: Door access management
- 104: Settlement terminal
- 105: Server
- 106: Wearable biometric authentication
- 107: Living body detection function
- 108: Wrist band
- 109: Closing/opening detection mechanism
- 110: Battery
- 111: Wearable device

## Claims

1. A portable key device for performing wireless communication with a control object device to release restriction on use, comprising:
a first key device and a second key device that perform wireless communication with each other;
a communication unit configured to perform wireless communication with another device;
a biometric authentication context saving unit of the first key device configured to save a biometric authentication success context; and
a detection unit of the first key device configured to detect wearing on a human body,
wherein in a case where the detection unit is detecting the wearing of the first key device on the human body, the biometric authentication context saving unit receives and saves therein a biometric authentication success context,
in a case where the biometric authentication context saving unit saves the biometric authentication success context and where a communication between the first key device and the second key device is established, the communication unit of the second key device emits a release signal that makes the restriction on use of the control object device be released,
in a case where the biometric authentication context saving unit saves the biometric authentication success context and where a communication between the first key device and the second key device is interrupted, the biometric authentication success saving unit still saves the biometric authentication success context and the communication unit of the second key device stops emission of the release signal, and
when the detection unit detects removal of the first key device from the human body by detecting a shape change caused by the wearing on the human body, the biometric authentication context saving unit discards the biometric authentication success context and the communication unit of the second key device stops emission of the release signal.

2. The portable key device according to claim 1,
wherein in a case where reception of the release signal by the control object device is stopped, the restriction on use is made effective, and
in a case where the biometric authentication success context is discarded, the communication unit requests input of biometric information related to the biometric authentication when communicating with the first key device and the second key device, and emits the release signal when the biometric authentication is successful.

3. The portable key device according to claim 1, further comprising:
a biometric information input unit configured to receive an input of biometric information for performing biometric authentication while the communication unit communicates with the first key device and the second key device; and
a biometric authentication unit configured to perform a biometric authentication process for the input biometric information and registered biometric data stored in a memory,
wherein a context of success of the biometric authentication process is saved in the biometric authentication context saving unit.

4. A device control method in which a portable key device comprising a first key device and a second key device that perform wireless communication with each other, and the second key device performs wireless communication with a control object device to release restriction on use,
wherein in a case where a detection unit of the first key device is detecting wearing of the first key device on a human body, a biometric authentication context saving unit of the first key device receives and saves therein a biometric authentication success context,
in a case where the biometric authentication context saving unit saves the biometric authentication success context and where a communication between the first key device and the second key device is established, a communication unit of the second key device emits a release signal that makes the restriction on use of the control object device be released,
in a case where the biometric authentication context saving unit saves the biometric authentication success context and where a communication between the first key device and the second key device is interrupted, the biometric authentication success saving unit still saves the biometric authentication success context and the communication unit of the second key device stops emission of the release signal, and
in a case where the detection unit detects removal of the first key device from the human body by detecting a shape change caused by the wearing on the human body, the biometric authentication context saving unit discards the biometric authentication success context and the communication unit of the second key device stops emission of the release signal.

5. The device control method according to claim 4,
wherein in a case where reception of the release signal by the control object device is stopped, the restriction on use is made effective,
in a case where the biometric authentication success context is discarded, input of biometric information related to the biometric authentication is requested when the communication unit communicates with the first key device and the second key device, and the release signal is emitted when the biometric authentication is successful.

6. The device control method according to claim 4,
wherein in a case where the communication unit is communicating with the first key device and the second key device, a biometric information input unit receives input of biometric information for performing biometric authentication,
a biometric authentication unit configured to perform a biometric authentication process for the input biometric information and registered biometric data stored in a memory, and
a context of success of the biometric authentication process is saved in the biometric authentication context saving unit.

## Patentansprüche

1. Tragbare Schlüsselvorrichtung zum Ausführen von drahtloser Kommunikation mit einer Steuerungsobjektvorrichtung, um eine Verwendungsbeschränkung freizugeben, umfassend:
eine erste Schlüsselvorrichtung und eine zweite Schlüsselvorrichtung, die miteinander drahtlose Kommunikation ausführen;
eine Kommunikationseinheit, die konfiguriert ist, drahtlose Kommunikation mit einer weiteren Vorrichtung auszuführen;
eine biometrische Authentifizierungskontextspeichereinheit der ersten Schlüsselvorrichtung, die konfiguriert ist, einen biometrischen Authentifizierungserfolgskontext zu speichern; und
eine Detektionseinheit der ersten Schlüsselvorrichtung, die konfiguriert ist, das Tragen an einem menschlichen Körper zu detektieren,
wobei in einem Fall, in dem die Detektionseinheit das Tragen der ersten Schlüsselvorrichtung am menschlichen Körper detektiert, die biometrische Authentifizierungskontextspeichereinheit einen biometrischen Authentifizierungserfolgskontext empfängt und in dieser speichert,
wobei in einem Fall, in dem die biometrische Authentifizierungskontextspeichereinheit den biometrischen Authentifizierungserfolgskontext speichert, und in dem eine Kommunikation zwischen der ersten Schlüsselvorrichtung und der zweiten Schlüsselvorrichtung hergestellt wird, die Kommunikationseinheit der zweiten Schlüsselvorrichtung ein Freigabesignal aussendet, das bewirkt, dass die Verwendungsbeschränkung der Steuerungsobjektvorrichtung freigegeben wird,
wobei in einem Fall, in dem die biometrische Authentifizierungskontextspeichereinheit den biometrischen Authentifizierungserfolgskontext speichert, und in dem eine Kommunikation zwischen der ersten Schlüsselvorrichtung und der zweiten Schlüsselvorrichtung unterbrochen wird, die biometrische Authentifizierungserfolgsspeichereinheit den biometrischen Authentifizierungserfolgskontext nach wie vor speichert, und die Kommunikationseinheit der zweiten Schlüsselvorrichtung das Aussenden des Freigabesignals anhält, und
wobei dann, wenn die Detektionseinheit ein Entfernen der ersten Schlüsselvorrichtung vom menschlichen Körper durch Detektieren einer durch das Tragen am menschlichen Körper hervorgerufenen Formänderung detektiert, die biometrische Authentifizierungskontextspeichereinheit den biometrischen Authentifizierungserfolgskontext verwirft, und die Kommunikationseinheit der zweiten Schlüsselvorrichtung das Aussenden des Freigabesignals anhält.

2. Tragbare Schlüsselvorrichtung gemäß Anspruch 1,
wobei in einem Fall, in dem ein Empfangen des Freigabesignals durch die Steuerungsobjektvorrichtung angehalten wird, bewirkt wird, dass die Verwendungsbeschränkung wirksam wird, und
wobei in einem Fall, in dem der biometrische Authentifizierungserfolgskontext verworfen wird, die Kommunikationseinheit bei Kommunizieren mit der ersten Schlüsselvorrichtung und der zweiten Schlüsselvorrichtung die Eingabe von biometrischen Informationen in Bezug auf die biometrische Authentifizierung anfordert, und das Freigabesignal aussendet, wenn die biometrische Authentifizierung erfolgreich ist.

3. Tragbare Schlüsselvorrichtung gemäß Anspruch 1, ferner umfassend:
eine biometrische Informationseingabeeinheit, die konfiguriert ist, eine Eingabe von biometrischen Informationen zum Ausführen einer biometrischen Authentifizierung zu empfangen, während die Kommunikationseinheit mit der ersten Schlüsselvorrichtung und der zweiten Schlüsselvorrichtung kommuniziert; und
eine biometrische Authentifizierungseinheit, die konfiguriert ist, einen biometrischen Authentifizierungsprozess für die eingegebenen biometrischen Informationen und die in einem Speicher gespeicherten, registrierten biometrischen Daten auszuführen,
wobei ein Kontext eines Erfolgs des biometrischen Authentifizierungsprozesses in der biometrischen Authentifizierungskontextspeichereinheit gespeichert ist.

4. Vorrichtungssteuerverfahren, bei dem eine tragbare Schlüsselvorrichtung eine erste Schlüsselvorrichtung und eine zweite Schlüsselvorrichtung umfasst, die miteinander drahtlose Kommunikation ausführen, und die zweite Schlüsselvorrichtung drahtlose Kommunikation mit einer Steuerungsobjektvorrichtung ausführt, um eine Verwendungsbeschränkung freizugeben,
wobei in einem Fall, in dem eine Detektionseinheit der ersten Schlüsselvorrichtung das Tragen der ersten Schlüsselvorrichtung an einem menschlichen Körper detektiert, eine biometrische Authentifizierungskontextspeichereinheit der ersten Schlüsselvorrichtung einen biometrischen Authentifizierungserfolgskontext empfängt und in dieser speichert,
wobei in einem Fall, in dem die biometrische Authentifizierungskontextspeichereinheit den biometrischen Authentifizierungserfolgskontext speichert, und in dem eine Kommunikation zwischen der ersten Schlüsselvorrichtung und der zweiten Schlüsselvorrichtung hergestellt wird, eine Kommunikationseinheit der zweiten Schlüsselvorrichtung ein Freigabesignal aussendet, das bewirkt, dass die Verwendungsbeschränkung der Steuerungsobjektvorrichtung freigegeben wird,
wobei in einem Fall, in dem die biometrische Authentifizierungskontextspeichereinheit den biometrischen Authentifizierungserfolgskontext speichert, und in dem eine Kommunikation zwischen der ersten Schlüsselvorrichtung und der zweiten Schlüsselvorrichtung unterbrochen wird, die biometrische Authentifizierungserfolgsspeichereinheit den biometrischen Authentifizierungserfolgskontext nach wie vor speichert, und die Kommunikationseinheit der zweiten Schlüsselvorrichtung das Aussenden des Freigabesignals anhält, und
wobei in einem Fall, in dem die Detektionseinheit das Entfernen der ersten Schlüsselvorrichtung vom menschlichen Körper durch Detektieren einer durch das Tragen am menschlichen Körper hervorgerufenen Formänderung detektiert, die biometrische Authentifizierungskontextspeichereinheit den biometrischen Authentifizierungserfolgskontext verwirft, und die Kommunikationseinheit der zweiten Schlüsselvorrichtung das Aussenden des Freigabesignals anhält.

5. Vorrichtungssteuerverfahren gemäß Anspruch 4,
wobei in einem Fall, in dem das Empfangen des Freigabesignals durch die Steuerungsobjektvorrichtung angehalten wird, bewirkt wird, dass die Verwendungsbeschränkung wirksam wird,
wobei in einem Fall, in dem der biometrische Authentifizierungserfolgskontext verworfen wird, eine Eingabe von biometrischen Informationen in Bezug auf die biometrische Authentifizierung angefordert wird, wenn die Kommunikationseinheit mit der ersten Schlüsselvorrichtung und der zweiten Schlüsselvorrichtung kommuniziert, und das Freigabesignal ausgesendet wird, wenn die biometrische Authentifizierung erfolgreich ist.

6. Vorrichtungssteuerverfahren gemäß Anspruch 4,
wobei in einem Fall, in dem die Kommunikationseinheit mit der ersten Schlüsselvorrichtung und der zweiten Schlüsselvorrichtung kommuniziert, eine biometrische Informationseingabeeinheit eine Eingabe von biometrischen Informationen zum Ausführen einer biometrischen Authentifizierung empfängt,
wobei eine biometrische Authentifizierungseinheit konfiguriert ist, einen biometrischen Authentifizierungsprozess für die eingegebenen biometrischen Informationen und registrierte, in einem Speicher gespeicherte, biometrische Daten auszuführen, und
wobei ein Kontext eines Erfolgs des biometrischen Authentifizierungsprozesses in der biometrischen Authentifizierungskontextspeichereinheit gespeichert wird.

## Revendications

1. Dispositif de clé portable destiné à mettre en oeuvre une communication sans fil avec un dispositif objet de commande en vue de libérer une restriction d'utilisation, comprenant :
un premier dispositif de clé et un second dispositif de clé qui mettent en oeuvre une communication sans fil entre eux;
une unité de communication configurée de manière à mettre en oeuvre une communication sans fil avec un autre dispositif ;
une unité d'enregistrement de contexte d'authentification biométrique du premier dispositif de clé, configurée de manière à enregistrer un contexte de réussite d'authentification biométrique ; et
une unité de détection du premier dispositif de clé, configurée de manière à détecter un port sur un corps humain ;
dans lequel, dans un cas où l'unité de détection détecte le port du premier dispositif de clé sur le corps humain, l'unité d'enregistrement de contexte d'authentification biométrique reçoit et enregistre dans celle-ci un contexte de réussite d'authentification biométrique ;
dans un cas où l'unité d'enregistrement de contexte d'authentification biométrique enregistre le contexte de réussite d'authentification biométrique, et où une communication entre le premier dispositif de clé et le second dispositif de clé est établie, l'unité de communication du second dispositif de clé émet un signal de libération qui libère la restriction d'utilisation du dispositif objet de commande ;
dans un cas où l'unité d'enregistrement de contexte d'authentification biométrique enregistre le contexte de réussite d'authentification biométrique, et où une communication entre le premier dispositif de clé et le second dispositif de clé est interrompue, l'unité d'enregistrement de contexte d'authentification biométrique enregistre encore le contexte de réussite d'authentification biométrique et l'unité de communication du second dispositif de clé interrompt l'émission du signal de libération ; et
lorsque l'unité de détection détecte le retrait du premier dispositif de clé du corps humain en détectant un changement de forme occasionné par le port sur le corps humain, l'unité d'enregistrement de contexte d'authentification biométrique rejette le contexte de réussite d'authentification biométrique et l'unité de communication du second dispositif de clé interrompt l'émission du signal de libération.

2. Dispositif de clé portable selon la revendication 1,
dans lequel, dans un cas où la réception du signal de libération par le dispositif objet de commande est interrompue, la restriction d'utilisation est rendue effective ; et
dans un cas où le contexte de réussite d'authentification biométrique est rejeté, l'unité de communication demande la saisie d'informations biométriques connexes à l'authentification biométrique dans le cadre de la communication avec le premier dispositif de clé et le second dispositif de clé, et émet le signal de libération lors de la réussite de l'authentification biométrique.

3. Dispositif de clé portable selon la revendication 1, comprenant en outre :
une unité de saisie d'informations biométriques configurée de manière à recevoir une saisie d'informations biométriques pour mettre en oeuvre une authentification biométrique tandis que l'unité de communication communique avec le premier dispositif de clé et le second dispositif de clé ; et
une unité d'authentification biométrique configurée de manière à mettre en oeuvre un processus d'authentification biométrique pour les informations biométriques saisies et des données biométriques enregistrées stockées dans une mémoire ;
dans lequel un contexte de réussite du processus d'authentification biométrique est enregistré dans l'unité d'enregistrement de contexte d'authentification biométrique.

4. Procédé de commande de dispositif dans lequel un dispositif de clé portable comprend un premier dispositif de clé et un second dispositif de clé qui mettent en oeuvre une communication sans fil entre eux, et dans lequel le second dispositif de clé met en oeuvre une communication sans fil avec un dispositif objet de commande en vue de libérer une restriction d'utilisation ;
dans lequel, dans un cas où une unité de détection du premier dispositif de clé détecte le port du premier dispositif de clé sur un corps humain, une unité d'enregistrement de contexte d'authentification biométrique du premier dispositif de clé reçoit et enregistre dans celle-ci un contexte de réussite d'authentification biométrique ;
dans un cas où l'unité d'enregistrement de contexte d'authentification biométrique enregistre le contexte de réussite d'authentification biométrique, et où une communication entre le premier dispositif de clé et le second dispositif de clé est établie, une unité de communication du second dispositif de clé émet un signal de libération qui libère la restriction d'utilisation du dispositif objet de commande ;
dans un cas où l'unité d'enregistrement de contexte d'authentification biométrique enregistre le contexte de réussite d'authentification biométrique, et où une communication entre le premier dispositif de clé et le second dispositif de clé est interrompue, l'unité d'enregistrement de contexte d'authentification biométrique enregistre encore le contexte de réussite d'authentification biométrique et l'unité de communication du second dispositif de clé interrompt l'émission du signal de libération ; et
dans un cas où l'unité de détection détecte le retrait du premier dispositif de clé du corps humain, en détectant un changement de forme occasionné par le port sur le corps humain, l'unité d'enregistrement de contexte d'authentification biométrique rejette le contexte de réussite d'authentification biométrique et l'unité de communication du second dispositif de clé interrompt l'émission du signal de libération.

5. Procédé de commande de dispositif selon la revendication 4,
dans lequel, dans un cas où la réception du signal de libération par le dispositif objet de commande est interrompue, la restriction d'utilisation est rendue effective ;
dans un cas où le contexte de réussite d'authentification biométrique est rejeté, une saisie d'informations biométriques connexes à l'authentification biométrique est demandée lorsque l'unité de communication communique avec le premier dispositif de clé et le second dispositif de clé, et le signal de libération est émis lorsque l'authentification biométrique a réussi.

6. Procédé de commande de dispositif selon la revendication 4,
dans lequel, dans un cas où l'unité de communication communique avec le premier dispositif de clé et le second dispositif de clé, une unité de saisie d'informations biométriques reçoit une saisie d'informations biométriques pour mettre en oeuvre une authentification biométrique ;
dans lequel une unité d'authentification biométrique est configurée de manière à mettre en oeuvre un processus d'authentification biométrique pour les informations biométriques saisies et les données biométriques enregistrées stockées dans une mémoire ; et
un contexte de réussite du processus d'authentification biométrique est enregistré dans l'unité d'enregistrement de contexte d'authentification biométrique.
